# EUROPEAN PATENT APPLICATION

(11) **EP 4 560 812 A1**
(43) Date of publication of application: **28.05.2025**
(21) Application number: 23842152.3
(22) Date of filing: 11.07.2023
(51) Int. Cl.: H01M 50/30, H01M 50/383

(54) **ENERGY STORAGE DEVICE**

(30) Priority: 20.07.2022 CN 202210853709
(71) Applicant: Contemporary Amperex Technology Co., Limited, Ningde, Fujian 352100 (CN)
(72) Inventor: KE, Jianhuang, Ningde, Fujian 352100 (CN); CHEN, Xiaobo, Ningde, Fujian 352100 (CN); LI, Yao, Ningde, Fujian 352100 (CN)
(74) Representative: Ran, Handong
(86) International application number: PCT/CN2023/106712
(87) International publication number: WO 2024/017087

(57) **Abstract**

The present application relates to the technical field of energy storage, and provides an energy storage device. The energy storage device comprises a battery and a treatment mechanism. The treatment mechanism is connected to the battery, and the treatment mechanism is used for treating emissions discharged to the treatment mechanism when the battery is subjected to thermal runaway. The energy storage device with such a structure is provided with the treatment mechanism, and the treatment mechanism is connected to the battery, so that the treatment mechanism can treat the emissions discharged by the battery when the battery is subjected to thermal runaway due to abnormity, thereby reducing the content of flammable substances in the emissions discharged by the battery, so as to reduce the flammability level of the emissions. Thus, the risk of deflagration of the energy storage device can be effectively reduced, a phenomenon that the energy storage device further causes breaking out of extensive fire is effectively alleviated, and the safety of the energy storage device in a use process can be improved.

## Description

### CROSS-REFERENCE TO RELATED APPLICATIONS

This application claims priority to Chinese patent application No. 202210853709.0, filed on July 20, 2022 and entitled "ENERGY STORAGE DEVICE", which is incorporated herein by reference in its entirety.

### TECHNICAL FIELD

This application relates to the field of energy storage technologies, and specifically, to an energy storage device.

### BACKGROUND

In recent years, with the rapid development of technology, various base stations such as 5G base stations have been widely promoted. Among basic operating devices of base stations, energy storage devices are of great significance for energy storage and energy supply, but energy storage devices also have high safety requirements. However, during application of energy storage devices, abnormal reasons such as weather conditions, battery aging, and overcharging often cause batteries of energy storage devices to experience thermal runaway, leading to risks of deflagration, rupture, or the like of energy storage devices, and even safety hazards caused by large-scale fire. This is not conducive to promotion and use.

### SUMMARY

Embodiments of this application provide an energy storage device that can effectively reduce safety hazards of the energy storage device during use.

According to a first aspect, an embodiment of this application provides an energy storage device including a battery; and a processing mechanism, the processing mechanism being connected to the battery, and the processing mechanism being configured to process emissions discharged to the processing mechanism during thermal runaway of the battery.

In the above technical solution, the energy storage device is provided with the processing mechanism, and the processing mechanism is connected to the battery, so that the processing mechanism can process the emissions discharged by the battery when the battery experiences thermal runaway caused by abnormality. This can reduce a percentage of a combustible substance in the emissions discharged by the battery, so as to reduce the combustion level of the emissions, thereby effectively reducing the deflagration risk of the energy storage device, and effectively mitigating the phenomenon of further large-scale fire caused by the energy storage device. This helps to improve the safety of the energy storage device during use.

In some embodiments, the processing mechanism includes a processing box and a processing unit. The processing box is connected to the battery, a processing chamber being formed inside the processing box, and the processing chamber being configured to accommodate the emissions. The processing unit is disposed inside the processing chamber, the processing unit being configured to process the emissions.

In the above technical solution, the processing mechanism is provided with the processing box and the processing unit, and the processing chamber connected to the battery is formed inside the processing box, allowing the processing chamber to accommodate the emissions discharged by the battery, and allowing the processing unit disposed inside the processing chamber to process the emissions inside the processing chamber, to reduce the combustion level of the emissions. This offers a simple structure that is easy to implement and can improve the processing effect of the processing unit on the emissions.

In some embodiments, the processing unit is configured to adsorb a combustible gas in the emissions; the processing unit is configured to catalyze a combustible gas in the emissions; or the processing unit is configured to ignite a combustible gas in the emissions.

In the above technical solution, the processing unit can capture the combustible gas in the emissions or convert it into other substances by using a processing manner of adsorption, catalysis, ignition, or the like, to remove the combustible gas from the emissions, thereby reducing the combustion level of the emissions. Therefore, the processing unit of this structure has a better processing effect.

In some embodiments, the battery has a pressure relief mechanism, the pressure relief mechanism being connected to the processing mechanism, and the pressure relief mechanism being configured to release internal pressure of the battery during thermal runaway of the battery, such that the emissions inside the battery are discharged to the processing mechanism.

In the above technical solution, the battery is provided with the pressure relief mechanism, and the processing mechanism is connected to the pressure relief mechanism of the battery, allowing the processing mechanism to process the emissions when the pressure relief mechanism releases the internal pressure of the battery. That is, when the pressure relief mechanism releases the internal pressure of the battery, the processing mechanism can communicate with the interior of the battery through the pressure relief mechanism, so that the battery can discharge, through the pressure relief mechanism, the emissions generated during thermal runaway to the processing mechanism for processing. Therefore, the energy storage device of this structure helps to further improve the use safety during use.

In some embodiments, the emissions include an exhaust gas, and a percentage of a combustible gas in the exhaust gas processed by the processing mechanism is a, satisfying a≤1.2%.

In the above technical solution, the processing mechanism can process the combustible gas in the exhaust gas of the emissions and reduce the percentage of the combustible gas in the processed exhaust gas to be less than or equal to 1.2%, maintaining the emissions at a low combustion level, thereby effectively reducing the risk of combustion, deflagration, or the like of the emissions and ensuring the use safety of the energy storage device.

In some embodiments, the energy storage device further includes a cabinet, the battery is disposed inside the cabinet, and the processing mechanism is disposed inside or outside the cabinet.

In the above technical solution, the processing mechanism can be disposed either inside or outside the cabinet of the energy storage device. Disposing the processing mechanism outside the cabinet can further mitigate the phenomenon of the emissions combustion and catching fire inside the cabinet, thereby reducing the deflagration risk of the energy storage device. Disposing the processing mechanism inside the cabinet can effectively reduce the manufacturing difficulty and manufacturing cost of the energy storage device.

In some embodiments, the energy storage device further includes a flow limiting mechanism, where the flow limiting mechanism is configured to limit a flow rate of the emissions discharged from the battery to the processing mechanism.

In the above technical solution, the flow limiting mechanism is further provided between the battery and the processing mechanism. The flow limiting mechanism can limit the flow rate of the emissions to some extent. This can reduce the phenomenon of not-in-time processing of the processing mechanism caused by an excessively high discharge speed of the emissions, and reduce the risk of a sudden internal pressure increase of the energy storage device caused by a large amount of emissions discharged by the battery of the energy storage device, thereby helping to reduce the risk of deflagration, rupture, or the like of the energy storage device and mitigating the phenomenon of large-scale fire of the energy storage device.

In some embodiments, the energy storage device further includes a gas storage mechanism, where the gas storage mechanism is connected to the battery, and both the gas storage mechanism and the battery are connected to the processing mechanism, the gas storage mechanism being configured to buffer the emissions discharged by the battery and provide the emissions to the processing mechanism.

In the above technical solution, the energy storage device is further provided with the gas storage mechanism, and the gas storage mechanism, the battery, and the processing mechanism are connected in pairs, allowing the gas storage mechanism to temporarily store the emissions discharged by the battery, thereby mitigating the phenomenon of not-in-time processing performed by the processing mechanism on the emissions and helping to improve the processing effect of the processing mechanism on the emissions.

In some embodiments, the energy storage device includes a plurality of batteries, where all of the plurality of batteries are connected to one processing mechanism.

In the above technical solution, the energy storage device has the plurality of batteries, helping to enhance the energy storage capacity of the energy storage device. All of the plurality of batteries are connected to one processing mechanism, allowing the plurality of batteries to share one processing mechanism. This helps to reduce the manufacturing cost and manufacturing difficulty of the energy storage device.

In some embodiments, the energy storage device further includes a main pipeline and a plurality of branch pipelines. The main pipeline is connected to the processing mechanism, and the main pipeline is provided with a flow limiting mechanism. The plurality of branch pipelines all are connected to the main pipeline, each branch pipeline being connected to one of the batteries.

In the above technical solution, the main pipeline and the plurality of branch pipelines connected to the main pipeline are provided, where each branch pipeline is connected to one of the batteries. In this way, the plurality of batteries can share one processing mechanism, offering a simple structure that is easy to implement. Additionally, providing the flow limiting mechanism on the main pipeline can limit the flow rate of the emissions to some extent, reducing the phenomenon of not-in-time processing of the processing mechanism caused by an excessively high discharge speed of the emissions, thereby improving the processing effect of the processing mechanism on the emissions.

In some embodiments, the energy storage device further includes a gas storage mechanism, where the gas storage mechanism is connected to the branch pipelines, the gas storage mechanism being configured to buffer the emissions discharged by the battery and provide the emissions to the main pipeline.

In the above technical solution, connecting the branch pipelines to the gas storage mechanism allows the gas storage mechanism to temporarily store the emissions discharged by the battery. This can mitigate the phenomenon of not-in-time processing performed by the processing mechanism on the emissions, and also reduce the burst risk of the main pipeline and branch pipelines caused by a sudden gas pressure increase of the main pipeline and branch pipelines, thus helping to ensure the use safety of the energy storage device.

In some embodiments, a total gas volume inside the plurality of batteries is V₁ measured in L, a space volume inside the gas storage mechanism is V₂ measured in L, and the flow limiting mechanism has a flow limiting opening for the emissions to pass through, the flow limiting opening having an area S measured in mm², satisfying 0.01<(V₁+V₂)/S<30.

In the above technical solution, setting the ratio of the sum of the total gas volume inside the plurality of batteries and the space volume inside the gas storage mechanism to the area of the flow limiting opening of the flow limiting mechanism within a range of 0.01 to 30 can control the discharge speed of the emissions within a certain range, ensuring that the processing mechanism is in a state capable of processing the emissions in time.

In some embodiments, a total electric capacity of the plurality of batteries is C₁ measured in Ah, the flow limiting mechanism has a flow limiting opening for the emissions to pass through, and the flow limiting opening has an area S measured in mm², satisfying 0.002<C₁/S<250.

In the above technical solution, the ratio of the total electric capacity of the plurality of batteries to the area of the flow limiting opening of the flow limiting mechanism is set within a range of 0.002 to 250, that is, the total electric capacity of the plurality of batteries is directly proportional to the amount of the emissions generated. In this way, limiting the ratio of the total electric capacity of the plurality of batteries to the area of the flow limiting opening of the flow limiting mechanism can control the discharge speed of the emissions within a certain range, ensuring that the processing mechanism is in a state capable of processing the emissions in time.

In some embodiments, the energy storage device includes a plurality of batteries and a plurality of processing mechanisms, where each of the batteries is connected to one of the processing mechanisms.

In the above technical solution, the energy storage device has the plurality of batteries, helping to increase the energy storage capacity of the energy storage device. The batteries and the processing mechanisms are arranged in a one-to-one correspondence, meaning that each processing mechanism correspondingly processes emissions discharged by one battery. The energy storage device of this structure helps to improve the processing effect of the processing mechanisms and can reduce the interference between the plurality of batteries.

In some embodiments, the energy storage device further includes a plurality of communication pipelines, one of the batteries being connected to one of the processing mechanisms through one of the communication pipelines, and each communication pipeline being provided with a flow limiting mechanism.

In the above technical solution, the plurality of communication pipelines are provided, and each pipeline is configured to communicate with one of the batteries and one of the processing mechanisms, so it is implemented that each battery is connected to one of the processing mechanisms. Additionally, providing the flow limiting mechanism on each communication pipeline can limit the flow rate of the emissions to some extent, reducing the phenomenon of not-in-time processing of the processing mechanism caused by an excessively high discharge speed of the emissions, thereby improving the processing effect of the processing mechanism on the emissions.

In some embodiments, a gas volume inside one of the batteries is V₃ measured in L, the flow limiting mechanism has a flow limiting opening for the emissions to pass through, and the flow limiting opening has an area S measured in mm², satisfying 0.01<V₃/S<30.

In the above technical solution, setting the ratio of the gas volume inside each battery to the area of the flow limiting opening of the corresponding flow limiting mechanism within a range of 0.01 to 30 can control the discharge speed of the emissions within a certain range, ensuring that the processing mechanism is in a state capable of processing the emissions in time.

In some embodiments, an electric capacity of one of the batteries is C₂ measured in Ah, the flow limiting mechanism has a flow limiting opening for the emissions to pass through, and the flow limiting opening has an area S measured in mm², satisfying 0.002<C₂/S<250.

In the above technical solution, the ratio of the electric capacity of each battery to the area of the flow limiting opening of the corresponding flow limiting mechanism is set within a range of 0.002 to 250, that is, the electric capacity of the battery is directly proportional to the amount of the emissions generated. In this way, limiting the ratio of the electric capacity of the battery to the area of the flow limiting opening of the flow limiting mechanism can control the discharge speed of the emissions within a certain range, ensuring that the processing mechanism is in a state capable of processing the emissions in time.

In some embodiments, the flow limiting mechanism is a flow limiting check valve.

In the above technical solution, the flow limiting check valve is used as the flow limiting mechanism. The flow limiting mechanism of this structure can limit the flow rate of the emissions to limit the speed of the emissions discharged to the processing mechanism, and also reduce the phenomenon of backflow of the emissions, thereby lowering the risk of explosion or deflagration of the battery caused by backflow of the emissions into the battery.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of an energy storage device according to some embodiments of this application;
FIG. 2 is an exploded view of a structure of a battery according to some embodiments of this application;
FIG. 3 is a cross-sectional view of a processing mechanism according to some embodiments of this application;
FIG. 4 is a cross-sectional view of a processing mechanism according to some other embodiments of this application;
FIG. 5 is a cross-sectional view of a processing mechanism according to some other embodiments of this application;
FIG. 6 is a schematic structural diagram of an energy storage device according to some other embodiments of this application; and
FIG. 7 is a schematic structural diagram of an energy storage device according to some other embodiments of this application.

Reference signs: 100. energy storage device; 10. battery; 11. box; 111. first portion; 112. second portion; 12. battery cell; 13. pressure relief mechanism; 20. processing mechanism; 21. processing box; 211. processing chamber; 212. inlet; 213. outlet; 214. vent hole; 22. processing unit; 30. cabinet; 40. flow limiting mechanism; 50. gas storage mechanism; 60. main pipeline; 70. branch pipeline; 80. communication pipeline; and X. length direction of processing box.

### DESCRIPTION OF EMBODIMENTS

To make the objectives, technical solutions, and advantages of some embodiments of this application clearer, the following clearly describes the technical solutions in some embodiments of this application with reference to the accompanying drawings in some embodiments of this application. Apparently, these embodiments described are some rather than all embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells or a plurality of battery modules. The box can prevent liquids or other foreign matter from affecting charging or discharging of the battery cell.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical battery cells, prismatic battery cells, and pouch battery cells. This is not limited in the embodiments of this application either.

In recent years, with the rapid development of technology, various base stations such as 5G base stations have been widely promoted. Among basic operating devices of base stations, energy storage devices are of great significance for energy storage and energy supply, but energy storage devices also have high safety requirements.

The inventors have found that for general batteries, a battery of an energy storage device is usually provided with a pressure relief valve, and the pressure relief valve is configured to release the internal pressure of the battery when the temperature or pressure inside the battery reaches a threshold, in order to reduce the explosion risk caused by thermal runaway during use of the battery. However, during application of energy storage devices, abnormal reasons such as weather conditions, battery aging, and overcharging often cause batteries of energy storage devices to experience thermal runaway, and it is highly likely that thermal runaway gases discharged by batteries lead to safety hazards such as fire. To reduce the fire risk of energy storage devices, in the prior art, fire extinguishing apparatuses are disposed inside cabinets of energy storage devices. These fire extinguishing apparatuses are configured for temperature cooling and fire extinguishing for batteries when thermal runaway of batteries occurs, to mitigate the phenomenon of spontaneous combustion of energy storage devices. However, in energy storage devices of such a structure, fire extinguishing apparatuses do not extinguish fire in time. When batteries undergo thermal runaway due to abnormal reasons, the large amount of thermal runaway gases produced by batteries contains a large amount of combustible components. As a result, it is highly likely that the combustible component imposes safety hazards such as deflagration or rapture on the energy storage device when there is a spark, leading to the risk of large-scale fire. This is not conducive to promotion and use.

In view of this, to solve the significant safety hazards of energy storage devices during use, the inventors have conducted in-depth research and designed an energy storage device. The energy storage device is provided with a processing mechanism, and the processing mechanism is connected to a battery. The processing mechanism is configured to process emissions discharged to the processing mechanism during thermal runaway of the battery.

When the energy storage device of this structure is configured to store electric energy, the energy storage device is provided with the processing mechanism, and the processing mechanism is connected to the battery, so that the processing mechanism can process the emissions discharged by the battery when the battery experiences thermal runaway caused by abnormality. This can reduce a percentage of a combustible substance in the emissions discharged by the battery, so as to reduce the combustion level of the emissions, thereby effectively reducing the deflagration risk of the energy storage device, and effectively mitigating the phenomenon of further large-scale fire caused by the energy storage device. This helps to improve the safety of the energy storage device during use.

An embodiment of this application provides an energy storage device that can reduce the highly likely risk of deflagration or rapture of existing energy storage devices when batteries experience thermal runaway, while such risk leads to the safety hazards of large-scale fire and is not conducive to promotion and use. The following describes a specific structure of the energy storage device in detail with reference to the accompanying drawings.

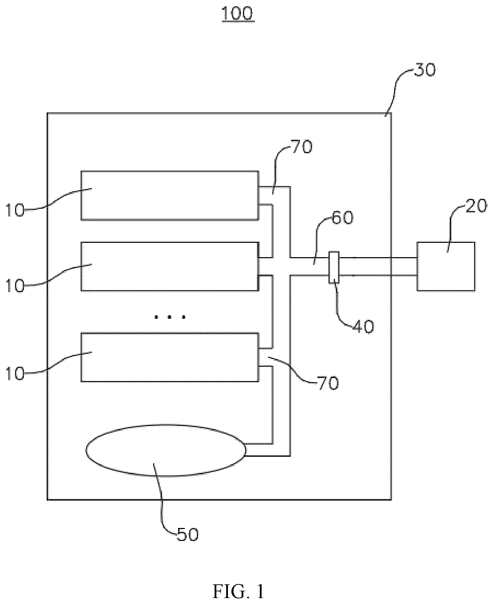

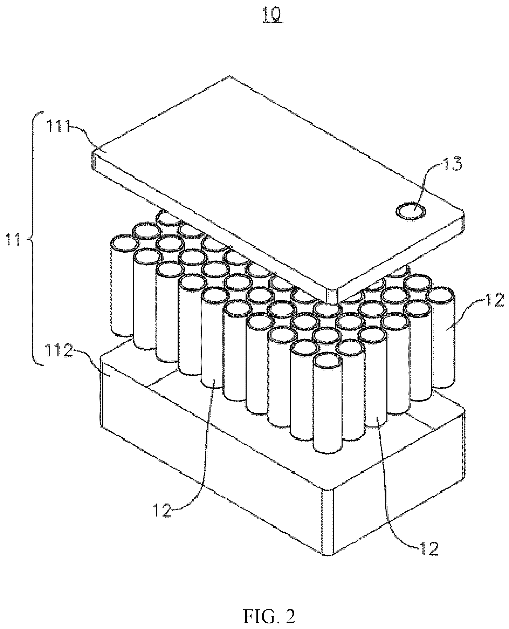

According to some embodiments of this application, referring to FIG. 1 and FIG. 2, FIG. 1 is a schematic structural diagram of an energy storage device 100 according to some embodiments of this application, and FIG. 2 is an exploded view of a structure of a battery 10 according to some embodiments of this application. This application provides an energy storage device 100, and the energy storage device 100 includes a battery 10 and a processing mechanism 20. The processing mechanism 20 is connected to the battery 10, the processing mechanism 20 being configured to process emissions discharged to the processing mechanism 20 during thermal runaway of the battery 10.

The processing mechanism 20 is configured to reduce combustible substances in the emissions discharged by the battery 10, mainly including combustible gases such as combustible gases like hydrogen, carbon monoxide, methane, methylene, and ethane, thereby reducing the percentage of the combustible gas in the emissions and lowering the combustion level of the emissions.

Optionally, the processing mechanism 20 can process the combustible gases in the emissions in various ways. For example, the percentage of the combustible gas in the emissions is reduced in manners such as filtration adsorption, catalytic reaction, or combustible gas combustion.

In some embodiments, referring to FIG. 2, the battery 10 includes a box 11 and a battery cell 12, where the battery cell 12 is accommodated in the box 11. The box 11 is configured to provide an accommodating space for the battery cell 12. The box 11 may be a variety of structures. For example, in FIG. 2, the box 11 may include a first portion 111 and a second portion 112. The first portion 111 and the second portion 112 fit together such that the first portion 111 and the second portion 112 jointly define a space for accommodating the battery cell 12. The second portion 112 is a hollow structure with one end open, and the first portion 111 may be a plate structure, where the first portion 111 covers the open side of the second portion 112 so that the first portion 111 and the second portion 112 jointly define the accommodating space. Certainly, in some other embodiments, the first portion 111 and the second portion 112 may both be hollow structures with one side open, where the open side of the first portion 111 is engaged with the open side of the second portion 112.

Optionally, the box 11 formed by the first portion 111 and the second portion 112 may be of a variety of shapes, for example, cylinder or cuboid.

In the battery 10, the battery cell 12 may be present in plurality, and the plurality of battery cells 12 may be connected in series, parallel, or series-parallel, where being connected in series-parallel means a combination of series and parallel connections of the plurality of battery cells 12. The plurality of battery cells 12 may be directly connected in series, parallel, or series-parallel, and then an entirety of the plurality of battery cells 12 is accommodated in the box 11. Certainly, the battery 10 may be formed by a plurality of battery cells 12 being connected in series, parallel, or series-parallel first to form a module of battery 10 and then a plurality of modules of battery 10 being connected in series, parallel, or series-parallel to form an entirety which is accommodated in the box 11. The battery 10 may further include other structures. For example, the battery 10 may further include a busbar configured to implement electrical connection between the plurality of battery cells 12.

Each battery cell 12 may be a secondary battery 10 or a primary battery 10, or may be a lithium-sulfur battery 10, a sodium-ion battery 10, or a magnesium-ion battery 10, without being limited thereto. The battery cell 12 may be cylindrical, flat, cuboid, or of other shapes. For example, in FIG. 2, the battery cell 12 is cylindrical.

It should be noted that the processing mechanism 20 is connected to the battery 10 so that the processing mechanism 20 can process the emissions discharged by the battery 10 during thermal runaway. That is, the processing mechanism 20 can communicate with the interior of the battery 10, and the processing mechanism 20 can directly communicate with the interior of the battery 10. For example, the box 11 of the battery 10 is provided with a pressure relief opening, and the processing mechanism 20 communicates with the pressure relief opening. Certainly, the processing mechanism 20 can alternatively indirectly communicate with the interior of the battery 10 through another component. For example, in FIG. 2, the box 11 of the battery 10 is provided with a pressure relief mechanism 13, and the pressure relief mechanism 13 is configured to release the internal pressure of the battery 10 when the temperature or gas pressure inside the battery 10 reaches a threshold, that is, release the internal pressure of the box 11. In other words, the pressure relief mechanism 13 can release thermal runaway gases inside the box 11 of the battery 10 when the temperature or gas pressure inside the battery 10 reaches the threshold, thereby achieving communication between the processing mechanism 20 and the interior of the battery 10. The pressure relief mechanism 13 can be installed on the first portion 111 of the box 11, or on the second portion 112 of the box 11. For example, the pressure relief mechanism 13 is installed on the first portion 111 of the box 11. The pressure relief mechanism 13 can also take various forms, such as explosion-proof valve, explosion-proof sheet, gas valve, pressure relief valve, safety valve, or other components.

The energy storage device 100 is provided with the processing mechanism 20, and the processing mechanism 20 is connected to the battery 10, so that the processing mechanism 20 can process the emissions discharged by the battery 10 when the battery 10 experiences thermal runaway caused by abnormality. This can reduce a percentage of a combustible substance in the emissions discharged by the battery 10, so as to reduce the combustion level of the emissions, thereby effectively reducing the deflagration risk of the energy storage device 100, and effectively mitigating the phenomenon of further large-scale fire caused by the energy storage device 100. This helps to improve the safety of the energy storage device 100 during use.

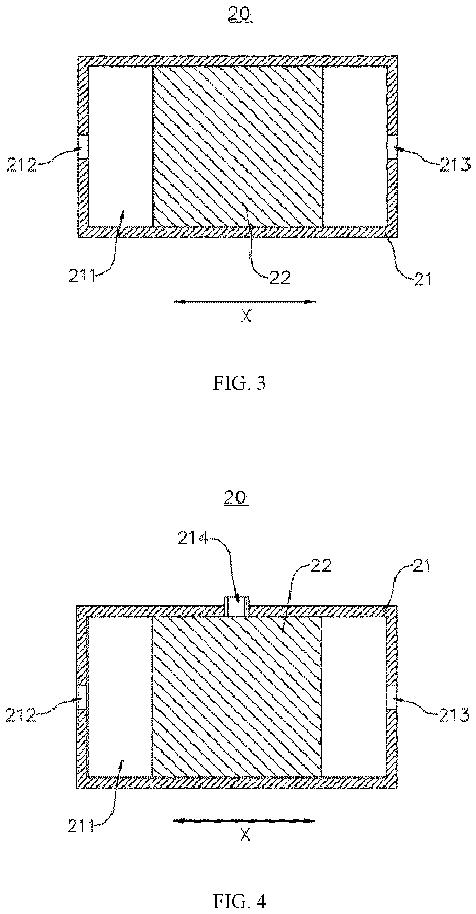

According to some embodiments of this application, referring to FIG. 1 and further referring to FIG. 3, FIG. 3 is a cross-sectional view of a processing mechanism 20 according to some embodiments of this application. The processing mechanism 20 includes a processing box 21 and a processing unit 22. The processing box 21 is connected to the battery 10, and a processing chamber 211 is formed inside the processing box 21. The processing chamber 211 is configured to accommodate the emissions. The processing unit 22 is disposed inside the processing chamber 211, and the processing unit 22 is configured to process the emissions.

The processing box 21 is provided with an inlet 212 and an outlet 213. Both the inlet 212 and the outlet 213 communicate with the processing chamber 211, and the inlet 212 is configured to communicate with the interior of the battery 10, allowing the emissions to enter the processing chamber 211. For example, the inlet 212 and outlet 213 are respectively provided on two opposite sides of the processing box 21 along a length direction X of the processing box. The processing unit 22 is located between the inlet 212 and the outlet 213. This structure is beneficial for circulation of the emissions inside the processing chamber 211 and can increase the contact time for the emissions and the processing unit 22, thereby improving the processing effect of the processing unit 22 on the emissions.

**In** some embodiments, the processing unit 22 is configured to adsorb a combustible gas in the emissions. Alternatively, the processing unit 22 is configured to catalyze a combustible gas in the emissions. Alternatively, the processing unit 22 is configured to ignite a combustible gas in the emissions. The processing unit 22 can capture the combustible gas in the emissions or convert it into other substances by using a processing manner of adsorption, catalysis, ignition, or the like, to remove the combustible gas from the emissions, thereby reducing the combustion level of the emissions. Therefore, the processing unit 22 of this structure has a better processing effect.

When the processing unit 22 is configured to adsorb the combustible gas in the emissions, the processing unit 22 can be a solid phase adsorption sheet or a liquid phase adsorption liquid. To be specific, the emissions entering the processing chamber 211 can pass through the solid phase adsorption sheet or liquid phase adsorption liquid, allowing the processing unit 22 to adsorb the combustible gas in the emissions. For example, when the processing unit 22 is a solid phase adsorption sheet, the processing unit 22 can be activated carbon, a molecular sieve, or the like. When the processing unit 22 is a liquid phase adsorption liquid, the processing unit 22 can be water, a liquid containing an oxidant, or the like.

When the processing unit 22 is configured to catalyze a combustible gas in the emissions, the processing unit 22 can be a noble metal catalyst, such as palladium, platinum, or rhodium. The noble metal catalyst can catalyze the combustible gas in the emissions to form a non-combustible substance, for example, catalyzing hydrogen and carbon monoxide in the emissions to form non-combustible water and carbon dioxide.

When the processing unit 22 is configured to ignite a combustible gas in the emissions, the processing unit 22 can be an igniter or the like, and the processing unit 22 can ignite the emissions entering the processing chamber 211, thereby reducing the combustible gas in the emissions. It should be noted that referring to FIG. 4, FIG. 4 is a cross-sectional view of a processing mechanism 20 according to some other embodiments of this application. When the processing unit 22 is configured to ignite a combustible gas in the emissions, the processing box 21 can further be provided with a vent hole 214. The vent hole 214 communicates with the processing chamber 211, and the vent hole 214 is configured to inject oxygen into the processing unit 22 to provide oxygen needed for the combustion of the emissions, thereby improving the processing effect of the processing unit 22 on the emissions.

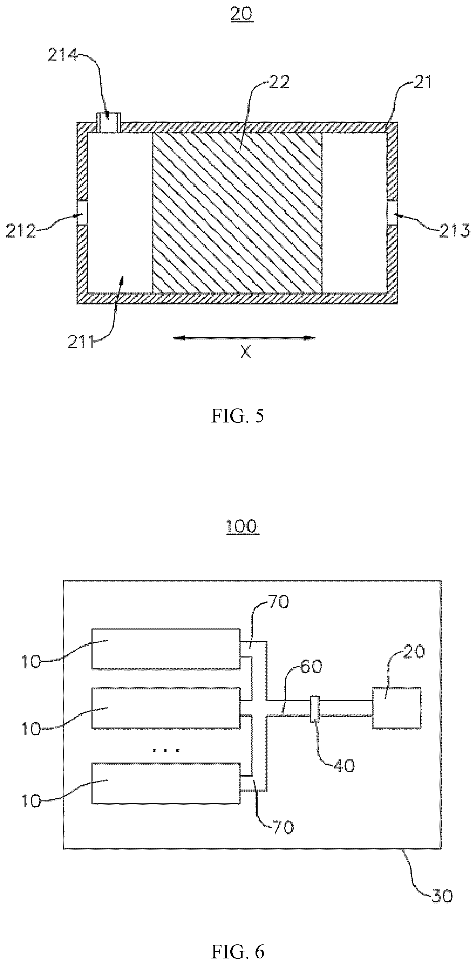

Certainly, the vent hole 214 can be disposed at various positions. For example, in FIG. 4, the vent hole 214 directly communicates with the processing unit 22, allowing oxygen to directly enter the processing unit 22 to facilitate the combustion of the emissions in the processing unit 22. In some embodiments, referring to FIG. 5, FIG. 5 is a cross-sectional view of a processing mechanism 20 according to some further embodiments of this application. The vent hole 214 may alternatively not communicate with the processing unit 22. The vent hole 214 is provided between the processing unit 22 and the inlet 212 along the length direction X of the processing box, so that the emissions can first mix with oxygen injected through the vent hole 214 before entering the processing unit 22, and then enter the processing unit 22, thereby improving the combustion effect of the emissions.

Optionally, when the processing unit 22 is configured to ignite a combustible gas in the emissions, the processing mechanism 20 can further be provided with a sensor and a control module. The sensor is configured to detect the concentration of the emissions in the processing chamber 211 and generate a control signal. The control module is configured to activate the processing unit 22 based on the control signal, so that the processing unit 22 can ignite the combustible gas in the emissions after the battery 10 undergoes thermal runaway and discharges the emissions into the processing chamber 211, thereby achieving automated control of the processing mechanism 20 and helping to save the costs of using the energy storage device 100 in later stage. For specific structures of the sensor and the control module, reference may be made to related arts and details are not described herein.

The processing mechanism 20 is provided with the processing box 21 and the processing unit 22, and the processing chamber 211 connected to the battery 10 is formed inside the processing box 21, allowing the processing chamber 211 to accommodate the emissions discharged by the battery 10, and allowing the processing unit 22 disposed inside the processing chamber 211 to process the emissions inside the processing chamber 211, to reduce the combustion level of the emissions. This offers a simple structure that is easy to implement and can improve the processing effect of the processing unit 22 on the emissions.

According to some embodiments of this application, as shown in FIG. 1 and FIG. 2, the battery 10 has a pressure relief mechanism 13. The pressure relief mechanism 13 is connected to the processing mechanism 20. The pressure relief mechanism 13 is configured to release the internal pressure of the battery 10 during thermal runaway of the battery 10, so that the emissions inside the battery 10 are discharged to the processing mechanism 20.

The pressure relief mechanism 13 is connected to the processing mechanism 20, that is, a side of the pressure relief mechanism 13 away from the interior of the battery 10 communicates with the processing box 21 of the processing mechanism 20, allowing the pressure relief mechanism 13 to discharge the emissions into the processing box 21 of the processing mechanism 20 when releasing the internal pressure of the battery 10. In other words, the pressure relief mechanism 13 can achieve communication between the interior of the battery 10 and the processing box 21 of the processing mechanism 20 when the valve is opened to release the pressure, allowing the emissions to enter the processing box 21 of the processing mechanism 20. For example, in FIG. 2, the pressure relief mechanism 13 is installed on the first portion 111 of the box 11. The pressure relief mechanism 13 can also take various forms, such as explosion-proof valve, explosion-roof disc, gas valve, pressure relief valve, or safety valve.

The battery 10 is provided with the pressure relief mechanism 13, and the processing mechanism 20 is connected to the pressure relief mechanism 13 of the battery 10, allowing the processing mechanism 20 to process the emissions when the pressure relief mechanism 13 releases the internal pressure of the battery 10. That is, when the pressure relief mechanism 13 releases the internal pressure of the battery 10, the processing mechanism 20 can communicate with the interior of the battery 10 through the pressure relief mechanism 13, so that the battery 10 can discharge, through the pressure relief mechanism 13, the emissions generated during thermal runaway to the processing mechanism 20 for processing. Therefore, the energy storage device 100 of this structure helps to further improve the use safety during use.

According to some embodiments of this application, the emissions include an exhaust gas, and a percentage of a combustible gas in the exhaust gas processed by the processing mechanism 20 is a, satisfying a≤1.2%.

The percentage of the combustible gas in the exhaust gas is a, that is, a is the proportion of the combustible gas in the exhaust gas of the emissions. The combustible gas in the emissions can take various forms, such as hydrogen, carbon monoxide, methane, methylene, or ethane. Experimental calculations show that an explosion lower limit or combustion lower limit of the combustible gas is related to the percentage of the combustible gas, as shown in the table below:

| Type of combustible gas | Chemical formula | Percentage for explosion lower limit (VOL%) |
|---|---|---|
| Hydrogen | H2 | 4 |
| Carbon monoxide | CO | 12.5 |
| Methane | CH4 | 5.3 |
| Ethane | C2H6 | 3 |
| Propane | C3H8 | 2.1 |
| Methylene | CH2 | 1.2 |
| Ethylene | C2H4 | 3.1 |
| Propylene | C3H6 | 2.1 |

Therefore, setting the percentage a of the combustible gas in the exhaust gas processed by the processing mechanism 20 to be less than or equal to 1.2% can effectively reduce the risk of explosion, combustion, or the like of the emissions.

The processing mechanism 20 can process the combustible gas in the exhaust gas of the emissions and reduce the percentage of the combustible gas in the processed exhaust gas to be less than or equal to 1.2%, maintaining the emissions at a low combustion level, thereby effectively reducing the risk of combustion, deflagration, or the like of the emissions and ensuring the use safety of the energy storage device 100.

According to some embodiments of this application, still referring to FIG. 1, the energy storage device 100 further includes a cabinet 30. The battery 10 is disposed inside the cabinet 30 and the processing mechanism 20 is disposed inside or outside the cabinet 30.

In FIG. 1, the processing mechanism 20 can be disposed outside the cabinet 30, that is, the processing mechanism 20 and the battery 10 are respectively disposed inside and outside the cabinet 30, and communication between the processing mechanism 20 and the battery 10 is implemented through other components, allowing the emissions discharged by the battery 10 to enter the processing mechanism 20 for processing.

In some embodiments, referring to FIG. 6, FIG. 6 is a schematic structural diagram of an energy storage device 100 according to some other embodiments of this application. The processing mechanism 20 can alternatively be disposed inside the cabinet 30, that is, both the processing mechanism 20 and the battery 10 are disposed inside the cabinet 30. In actual use, the disposition can be made according to actual usage requirements, and this is not limited in this application.

The processing mechanism 20 can be disposed either inside or outside the cabinet 30 of the energy storage device 100. Disposing the processing mechanism 20 outside the cabinet 30 can further mitigate the phenomenon of the emissions combustion and catching fire inside the cabinet 30, thereby reducing the deflagration risk of the energy storage device 100. Disposing the processing mechanism 20 inside the cabinet 30 can effectively reduce the manufacturing difficulty and manufacturing cost of the energy storage device 100.

According to some embodiments of this application, referring to FIG. 1, the energy storage device 100 further includes a flow limiting mechanism 40. The flow limiting mechanism 40 is configured to limit a flow rate of the emissions discharged from the battery 10 to the processing mechanism 20.

The processing mechanism 20 is connected to the battery 10 through a pipeline, and the flow limiting mechanism 40 is provided on the pipeline between the battery 10 and the processing mechanism 20, thereby implementing that the flow limiting mechanism 40 limits the flow rate of the emissions discharged from the battery 10 to the processing mechanism 20. For example, the flow limiting mechanism 40 is a flow rate control valve such as a throttle valve, a speed control valve, a flow divider valve, or a flow collector valve to control the flow rate of the emissions in the pipeline.

The flow limiting mechanism 40 is further provided between the battery 10 and the processing mechanism 20. The flow limiting mechanism 40 can limit the flow rate of the emissions to some extent. This can reduce the phenomenon of not-in-time processing of the processing mechanism 20 caused by an excessively high discharge speed of the emissions, and reduce the risk of a sudden internal pressure increase of the energy storage device 100 caused by a large amount of emissions discharged by the battery 10 of the energy storage device 100, thereby helping to reduce the risk of deflagration, rupture, or the like of the energy storage device 100 and mitigating the phenomenon of large-scale fire of the energy storage device 100.

According to some embodiments of this application, still referring to FIG. 1, the energy storage device 100 further includes a gas storage mechanism 50. The gas storage mechanism 50 is connected to the battery 10, and both the gas storage mechanism 50 and the battery 10 are connected to the processing mechanism 20, the gas storage mechanism 50 being configured to buffer the emissions discharged by the battery 10 and provide the emissions to the processing mechanism 20.

The gas storage mechanism 50 is connected to the battery 10, and both the gas storage mechanism 50 and the battery 10 are connected to the processing mechanism 20. That is, the gas storage mechanism 50, the battery 10, and the processing mechanism 20 are connected in pairs, allowing the gas storage mechanism 50 to store the emissions discharged by the battery 10.

For example, the gas storage mechanism 50 can be a flexible airbag, a negative pressure gas tank, or other sealed containers for storing the emissions discharged by the battery 10.

The energy storage device 100 is further provided with the gas storage mechanism 50, and the gas storage mechanism 50, the battery 10, and the processing mechanism 20 are connected in pairs, allowing the gas storage mechanism 50 to temporarily store the emissions discharged by the battery 10, thereby mitigating the phenomenon of not-in-time processing performed by the processing mechanism 20 on the emissions and helping to improve the processing effect of the processing mechanism 20 on the emissions.

According to some embodiments of this application, referring to FIG. 1, the energy storage device 100 includes a plurality of batteries 10, and all of the plurality of batteries 10 are connected to one processing mechanism 20.

That all of the plurality of batteries 10 are connected to one processing mechanism 20 means that one processing mechanism 20 is connected to the plurality of batteries 10, allowing the plurality of batteries 10 to share one processing mechanism 20.

The energy storage device 100 has the plurality of batteries 10, helping to enhance the energy storage capacity of the energy storage device 100. All of the plurality of batteries 10 are connected to one processing mechanism 20, allowing the plurality of batteries 10 to share one processing mechanism 20. This helps to reduce the manufacturing cost and manufacturing difficulty of the energy storage device 100.

In some embodiments, still referring to FIG. 1, the energy storage device 100 further includes a main pipeline 60 and a plurality of branch pipelines 70. The main pipeline 60 is connected to the processing mechanism 20, and the main pipeline 60 is provided with a flow limiting mechanism 40. All of the plurality of branch pipelines 70 are connected to the main pipeline 60, and each branch pipeline 70 is connected to one battery 10.

Each branch pipeline 70 is connected to the pressure relief mechanism 13 of one battery 10, allowing the pressure relief mechanism 13 to discharge the emissions into the corresponding branch pipeline 70 when releasing the emissions in the battery 10, so that the emissions can enter the processing mechanism 20 through the main pipeline 60. The branch pipelines 70 and the main pipeline 60 can be made of various materials, such as copper, aluminum, and alloy.

The flow limiting mechanism 40 is provided on the main pipeline 60, implementing that the flow limiting mechanism 40 limits the flow rate of the emissions discharged from the battery 10 to the processing mechanism 20. For example, the flow limiting mechanism 40 is a flow rate control valve such as a throttle valve, a speed control valve, a flow divider valve, or a flow collector valve to control the flow rate of the emissions in the main pipeline 60.

The main pipeline 60 and the plurality of branch pipelines 70 connected to the main pipeline 60 are provided, where each branch pipeline 70 is connected to one of the batteries 10. In this way, the plurality of batteries 10 can share one processing mechanism 20, offering a simple structure that is easy to implement. Additionally, providing the flow limiting mechanism 40 on the main pipeline 60 can limit the flow rate of the emissions to some extent, reducing the phenomenon of not-in-time processing of the processing mechanism 20 caused by an excessively high discharge speed of the emissions, thereby improving the processing effect of the processing mechanism 20 on the emissions.

According to some embodiments of this application, still referring to FIG. 1, the energy storage device 100 further includes a gas storage mechanism 50. The gas storage mechanism 50 is connected to the branch pipelines 70, the gas storage mechanism 50 being configured to buffer the emissions discharged by the battery 10 and provide the emissions to the main pipeline 60.

The gas storage mechanism 50 is connected to the branch pipelines 70, that is, the gas storage mechanism 50 communicates with one of the plurality of branch pipelines 70, allowing the gas storage mechanism 50, the battery 10, and the processing mechanism 20 to be connected in pairs through the main pipeline 60 and the branch pipelines 70, and allowing the gas storage mechanism 50 to store the emissions discharged by the battery 10, and discharge the stored emissions to the processing mechanism 20 through the branch pipelines 70 and the main pipeline 60 for processing.

For example, the gas storage mechanism 50 can be a flexible airbag, a negative pressure gas tank, or other sealed containers for storing the emissions discharged by the battery 10.

Connecting the branch pipelines 70 to the gas storage mechanism 50 allows the gas storage mechanism 50 to temporarily store the emissions discharged by the battery 10. This can mitigate the phenomenon of not-in-time processing performed by the processing mechanism 20 on the emissions, and also reduce the burst risk of the main pipeline 60 and branch pipelines 70 caused by a sudden gas pressure increase of the main pipeline 60 and branch pipelines 70, thus helping to ensure the use safety of the energy storage device 100.

In some embodiments, a total gas volume inside the plurality of batteries 10 is V₁ measured in L, a space volume inside the gas storage mechanism 50 is V₂ measured in L, and the flow limiting mechanism 40 has a flow limiting opening for the emissions to pass through, the flow limiting opening having an area S measured in mm², satisfying 0.01<(V₁+V₂)/S<30.

The total gas volume inside the plurality of batteries 10 being V₁ means that the sum of volumes of gases inside the plurality of batteries 10 is V₁. The space volume inside the gas storage mechanism 50 being V₂ means that the volume inside the gas storage mechanism 50 for storing the emissions is V₂. The area of the flow limiting opening being S means that the size of an opening, of the flow limiting opening of the flow limiting mechanism 40, used for allowing the emissions to pass through and enter the processing mechanism 20 is S.

Setting the ratio of the sum of the total gas volume inside the plurality of batteries 10 and the space volume inside the gas storage mechanism 50 to the area of the flow limiting opening of the flow limiting mechanism 40 within a range of 0.01 to 30 can control the discharge speed of the emissions within a certain range, ensuring that the processing mechanism 20 is in a state capable of processing the emissions in time.

In some embodiments, a total electric capacity of the plurality of batteries 10 is C₁ measured in Ah, the flow limiting mechanism 40 has a flow limiting opening for the emissions to pass through, and the flow limiting opening has an area S measured in mm², satisfying 0.002<C₁/S<250.

The total electric capacity of the plurality of batteries 10 being C₁ means that the sum of electric capacities of the plurality of batteries 10 is C₁. The area of the flow limiting opening being S means that the size of an opening, of the flow limiting opening of the flow limiting mechanism 40, used for allowing the emissions to pass through and enter the processing mechanism 20 is S.

The ratio of the total electric capacity of the plurality of batteries 10 to the area of the flow limiting opening of the flow limiting mechanism 40 is set within a range of 0.002 to 250, that is, the total electric capacity of the plurality of batteries 10 is directly proportional to the amount of the emissions generated. In this way, limiting the ratio of the total electric capacity of the plurality of batteries 10 to the area of the flow limiting opening of the flow limiting mechanism 40 can control the discharge speed of the emissions within a certain range, ensuring that the processing mechanism 20 is in a state capable of processing the emissions in time.

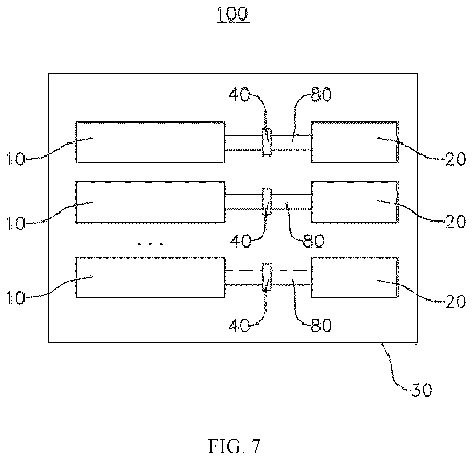

According to some embodiments of this application, referring to FIG. 7, FIG. 7 is a schematic structural diagram of an energy storage device 100 according to some other embodiments of this application. The energy storage device 100 includes a plurality of batteries 10 and a plurality of processing mechanisms 20, with each battery 10 being connected to one of the processing mechanisms 20.

Each battery 10 being connected to one of the processing mechanisms 20 means that one processing mechanism 20 is connected to one of the batteries 10, allowing each processing mechanism 20 to process the emissions discharged by one of the batteries 10.

In the energy storage device 100 of this structure, all of the processing mechanisms 20 can be disposed inside the cabinet 30 of the energy storage device 100, or can be disposed outside the cabinet 30 of the energy storage device 100. Certainly, it can be that one part of the processing mechanisms 20 is disposed inside the cabinet 30 of the energy storage device 100, and the other part of the processing mechanisms 20 is disposed outside the cabinet 30 of the energy storage device 100. For example, in FIG. 7, the processing mechanisms 20 are all disposed inside the cabinet 30 of the energy storage device 100.

The energy storage device 100 has the plurality of batteries 10, helping to increase the energy storage capacity of the energy storage device 100. The batteries 10 and the processing mechanisms 20 are arranged in a one-to-one correspondence, meaning that each processing mechanism 20 correspondingly processes emissions discharged by one of the batteries 10. The energy storage device 100 of this structure helps to improve the processing effect of the processing mechanisms 20 and can reduce the interference between the plurality of batteries 10.

According to some embodiments of this application, still referring to FIG. 7, the energy storage device 100 further includes a plurality of communication pipelines 80. One of the batteries 10 is connected to one of the processing mechanisms 20 through one of the communication pipelines 80, and each communication pipeline 80 is provided with a flow limiting mechanism 40.

One of the batteries 10 and one of the processing mechanisms 20 being connected through one of the communication pipelines 80 means that one end of each communication pipeline 80 is connected to the pressure relief mechanism 13 of the corresponding battery 10, and the other end communicates with the processing box 21 of the processing mechanism 20. This allows the pressure relief mechanism 13 to discharge the emissions into the corresponding communication pipeline 80 when releasing the emissions in the battery 10, so that the emissions can enter the corresponding processing mechanism 20 through the communication pipeline 80. The communication pipelines 80 can be made of various materials, such as copper, aluminum, and alloy.

Each communication pipeline 80 is provided with a flow limiting mechanism 40, implementing that the flow limiting mechanism 40 limits the flow rate of the emissions discharged from the corresponding battery 10 to the corresponding processing mechanism 20. For example, the flow limiting mechanism 40 is a flow rate control valve such as a throttle valve, a speed control valve, a flow divider valve, or a flow collector valve to control the flow rate of the emissions in the corresponding communication pipeline 80.

The plurality of communication pipelines 80 are provided, and each pipeline is configured to communicate with one of the batteries 10 and one of the processing mechanisms 20, so it is implemented that each battery 10 is connected to one of the processing mechanisms 20. Additionally, providing the flow limiting mechanism 40 on each communication pipeline 80 can limit the flow rate of the emissions to some extent, reducing the phenomenon of not-in-time processing of the processing mechanism 20 caused by an excessively high discharge speed of the emissions, thereby improving the processing effect of the processing mechanism 20 on the emissions.

In some embodiments, a gas volume inside one of the batteries 10 is V₃ measured in L, the flow limiting mechanism 40 has a flow limiting opening for the emissions to pass through, and the flow limiting opening has an area S measured in mm², satisfying 0.01<V₃/S<30.

The gas volume inside one of the batteries 10 being V₃ means that the volume of gases inside the battery 10 is V₃. The area of the flow limiting opening being S means that the size, of an opening of the flow limiting opening of the flow limiting mechanism 40 corresponding to each battery 10, used for allowing the emissions to pass through and enter the processing mechanism 20 is S.

Setting the ratio of the gas volume inside each battery 10 to the area of the flow limiting opening of the corresponding flow limiting mechanism 40 within a range of 0.01 to 30 can control the discharge speed of the emissions within a certain range, ensuring that the processing mechanism 20 is in a state capable of processing the emissions in time.

In some embodiments, an electric capacity of one of the batteries 10 is C₂ measured in Ah, the flow limiting mechanism 40 has a flow limiting opening for the emissions to pass through, and the flow limiting opening has an area S measured in mm², satisfying 0.002<C₂/S<250.

The electric capacity of one of the batteries 10 being C₂ means that the electric capacity of the battery 10 itself is C₂. The area of the flow limiting opening being S means that the size of an opening, of the flow limiting opening of the flow limiting mechanism 40 corresponding to each battery 10, used for allowing the emissions to pass through and enter the processing mechanism 20 is S.

The ratio of the electric capacity of each battery 10 to the area of the flow limiting opening of the corresponding flow limiting mechanism 40 is set within a range of 0.002 to 250, that is, the electric capacity of the battery 10 is directly proportional to the amount of the emissions generated. In this way, limiting the ratio of the electric capacity of the battery 10 to the area of the flow limiting opening of the flow limiting mechanism 40 can control the discharge speed of the emissions within a certain range, ensuring that the processing mechanism 20 is in a state capable of processing the emissions in time.

According to some embodiments of this application, referring to FIG. 1 and FIG. 7, the flow limiting mechanism 40 is a flow limiting check valve, that is, in the above embodiments of the energy storage device 100 with the flow limiting mechanism 40, the flow limiting mechanism 40 is a flow limiting check valve. In this way, the flow limiting mechanism 40 can allow the emissions discharged by the battery 10 to enter the processing mechanism 20, and prevent the emissions in the processing mechanism 20 from entering the battery 10.

The flow limiting check valve is used as the flow limiting mechanism 40. The flow limiting mechanism 40 of this structure can limit the flow rate of the emissions to limit the speed of the emissions discharged to the processing mechanism 20, and also reduce the phenomenon of backflow of the emissions, thereby lowering the risk of explosion or deflagration of the battery 10 caused by backflow of the emissions into the battery 10.

According to some embodiments of this application, referring to FIGs. 1 to 3, this application provides an energy storage device 100. The energy storage device 100 includes a cabinet 30, a plurality of batteries 10, a processing mechanism 20, a main pipeline 60, a plurality of branch pipelines 70, a flow limiting mechanism 40, and a gas storage mechanism 50. All of the plurality of batteries 10 are disposed inside the cabinet 30, and the battery 10 has a pressure relief mechanism 13. The pressure relief mechanism 13 is configured to release the internal pressure of the battery 10 during thermal runaway of the battery 10. All of the plurality of branch pipelines 70 communicate with the main pipeline 60, and each main pipeline 60 is connected to a pressure relief mechanism 13 of one battery 10. The main pipeline 60 is connected to the processing mechanism 20, allowing to discharge the emissions inside the battery 10 to the processing mechanism 20 through the pressure relief mechanism 13 during thermal runaway of the battery 10. The processing mechanism 20 includes a processing box 21 and a processing unit 22, and a processing chamber 211 is formed inside the processing box 21. The processing chamber 211 communicates with the main pipeline 60, and the processing chamber 211 is configured to accommodate the emissions. The processing unit 22 is disposed inside the processing chamber 211, and the processing unit 22 is configured to process the emissions to reduce a percentage of a combustible gas in the emissions. The flow limiting mechanism 40 is provided on the main pipeline 60, and the flow limiting mechanism 40 is configured to limit a flow rate of the emissions discharged from the battery 10 to the processing mechanism 20. The gas storage mechanism 50 is connected to the branch pipelines 70, the gas storage mechanism 50 being configured to buffer the emissions discharged by the battery 10 and provide the emissions to the main pipeline 60. The flow limiting mechanism 40 is a flow limiting check valve, and the processing unit 22 is configured to adsorb a combustible gas in the emissions.

It should be noted that, without conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. An energy storage device, comprising:
a battery; and
a processing mechanism connected to the battery, the processing mechanism configured to process emissions discharged to the processing mechanism during thermal runaway of the battery.

2. The energy storage device according to claim 1, wherein the processing mechanism comprises:
a processing box connected to the battery, a processing chamber formed inside the processing box, and the processing chamber configured to accommodate the emissions; and
a processing unit disposed inside the processing chamber, the processing unit configured to process the emissions.

3. The energy storage device according to claim 2, wherein the processing unit is configured to adsorb a combustible gas in the emissions;
the processing unit is configured to catalyze a combustible gas in the emissions; or
the processing unit is configured to ignite a combustible gas in the emissions.

4. The energy storage device according to any one of claims 1 to 3, wherein the battery has a pressure relief mechanism, the pressure relief mechanism connected to the processing mechanism, and the pressure relief mechanism configured to release internal pressure of the battery during thermal runaway of the battery, such that the emissions inside the battery are discharged to the processing mechanism.

5. The energy storage device according to any one of claims 1 to 4, wherein the emissions comprise an exhaust gas, and a percentage of a combustible gas in the exhaust gas processed by the processing mechanism is a, satisfying a≤1.2%.

6. The energy storage device according to any one of claims 1 to 5, wherein the energy storage device further comprises a cabinet, the battery is disposed inside the cabinet, and the processing mechanism is disposed inside or outside the cabinet.

7. The energy storage device according to any one of claims 1 to 6, wherein the energy storage device further comprises:
a flow limiting mechanism configured to limit a flow rate of the emissions discharged from the battery to the processing mechanism.

8. The energy storage device according to any one of claims 1 to 7, wherein the energy storage device further comprises:
a gas storage mechanism connected to the battery, wherein both the gas storage mechanism and the battery are connected to the processing mechanism, the gas storage mechanism is configured to buffer the emissions discharged from the battery and provide the emissions to the processing mechanism.

9. The energy storage device according to any one of claims 1 to 8, wherein the energy storage device comprises a plurality of batteries, wherein all of the plurality of batteries are connected to one processing mechanism.

10. The energy storage device according to claim 9, wherein the energy storage device further comprises:
a main pipeline connected to the processing mechanism, the main pipeline provided with a flow limiting mechanism; and
a plurality of branch pipelines, each branch pipeline connected to the main pipeline and one of the batteries.

11. The energy storage device according to claim 10, wherein the energy storage device further comprises:
a gas storage mechanism connected to the branch pipelines, the gas storage mechanism configured to buffer the emissions discharged from the batteries and provide the emissions to the main pipeline.

12. The energy storage device according to claim 11, wherein a total gas volume inside the plurality of batteries is V₁ measured in L, a space volume inside the gas storage mechanism is V₂ measured in L, and the flow limiting mechanism has a flow limiting opening for the emissions to pass through, the flow limiting opening having an area S measured in mm², satisfying 0.01<(V₁+V₂)/S<30.

13. The energy storage device according to claim 10, wherein a total electric capacity of the plurality of batteries is C₁ measured in Ah, the flow limiting mechanism has a flow limiting opening for the emissions to pass through, and the flow limiting opening has an area S measured in mm², satisfying 0.002<C₁/S<250.

14. The energy storage device according to any one of claims 1 to 8, wherein the energy storage device comprises a plurality of batteries and a plurality of processing mechanisms, wherein each of the batteries is connected to one of the processing mechanisms.

15. The energy storage device according to claim 14, wherein the energy storage device further comprises:
a plurality of communication pipelines, one of the batteries connected to one of the processing mechanisms through one of the communication pipelines, and each communication pipeline provided with a flow limiting mechanism.

16. The energy storage device according to claim 15, wherein a gas volume inside one of the batteries is V₃ measured in L, the flow limiting mechanism has a flow limiting opening for the emissions to pass through, and the flow limiting opening has an area S measured in mm², satisfying 0.01<V₃/S<30.

17. The energy storage device according to claim 15, wherein an electric capacity of one of the batteries is C₂ measured in Ah, the flow limiting mechanism has a flow limiting opening for the emissions to pass through, and the flow limiting opening has an area S measured in mm², satisfying 0.002<C₂/S<250.

18. The energy storage device according to any one of claims 7, 10, and 15, wherein the flow limiting mechanism is a flow limiting check valve.
